# EUROPÄISCHE PATENTSCHRIFT

(11) **EP 3 473 072 B1**
(45) Veröffentlichungstag und Bekanntmachung des Hinweises auf die Patenterteilung: **16.02.2022**
(21) Anmeldenummer: 18192390.5
(22) Anmeldetag: 04.09.2018
(51) Int. Cl.: A01D 34/30, A01D 41/14

(54) **SCHNEIDWERK**
CUTTING TOOL
BARRE DE COUPE

(30) Priorität: 28.09.2017 DE 102017122643
(43) Veröffentlichungstag der Anmeldung: 24.04.2019
(73) Patentinhaber: CLAAS Selbstfahrende Erntemaschinen GmbH, 33428 Harsewinkel (DE)
(72) Erfinder: Herter, Felix, 33428 Harsewinkel (DE); Aerdker, Bernhard, 48231 Warendorf (DE)
(74) Vertreter: CLAAS Gruppe

(56) Entgegenhaltungen:
- EP-A1- 2 918 158
- DE-A1-102010 040 870
- DE-A1-102015 106 087
- US-A1- 2014 345 239

## Beschreibung

Die vorliegende Erfindung betrifft ein Schneidwerk, mit einem sich im Wesentlichen über die Breite des Schneidwerks erstreckenden, segmentierten Mähbalken, wobei der Mähbalken zumindest ein erstes und ein zweites jeweils mit Mähmessern versehenes Segment aufweist, die von einem gemeinsamen Mähmesserantrieb oszillierend antreibbar sind, mit welchem das erste Segment durch einen ersten schwenkbar gelagerten Umlenkhebel und das zweite Segment durch einen zweiten schwenkbar gelagerten Umlenkhebel trieblich verbunden sind.

Bei Schneidwerken ist es bekannt, an einem oder beiden äußeren Enden eines Mähbalkens einen Mähmesserantrieb vorzusehen, um auf dem Mähbalken angeordnete Mähmesser in seitlicher Bewegung hin- und her zu bewegen. Hierzu sind Komponenten des Antriebsstranges in Seitenwänden des Schneidwerks angeordnet. Mit zunehmender Arbeitsbreite der Schneidwerke gehen aufgrund der damit einhergehenden Verlängerung der Kraftübertragungswege im Antriebsstrang Übertragungsverluste sowie erhebliche mechanische Belastungen für die Antriebskomponenten einher. Zudem stehen die Seitenwände aufgrund ihrer für die Anordnung der Komponenten erforderlichen Breite für das Schneiden von Erntegut in diesen Bereichen nicht zur Verfügung, sondern tragen zu Erntegutverlusten bei.

Zur Verkürzung der Übertragungswege ist es aus der DE 10 2010 040 870 A1 bekannt, ein Bandschneidwerk mit segmentierten Mähbalken mit einem gemeinsamen Mähmesserantrieb auszuführen. Hierzu ist das jeweilige Segment des Messerbalkens mit einem jeweils um eine vertikale Achse schwenkbar gelagerten Winkelhebel antriebsverbunden. Ein sich quer zum Messerbalken in der Horizontalen erstreckendes Antriebselement führt eine wechselnde vor und zurück gerichtete Bewegung aus, die von dem jeweiligen Winkelhebel in eine korrespondierende seitliche Bewegung der Messerbalkensegmente überführt wird. Die Anordnung des Mähmesserantriebs erfolgt dabei zwischen einem seitwärts umlaufenden Förderband, da der dem Einzug dienende Mittenbereich des Bandschneidwerks durch das quer zu den Seitenbändern umlaufende Mittenband bauraumtechnisch nicht nutzbar ist. Der aus der DE 10 2010 040 870 A1 bekannte Mähmesserantrieb ist aufgrund seiner starren Konstruktion unflexibel und benötigt durchgehenden freien Bauraum. Zudem ist der Phasenverssatz der Schwingbewegungen der beiden Segmente des Messerbalkens wegen der außermittigen Positionierung zwischen einem der Förderbänder zueinander fix.

In der EP 2 918 158 A1 ist ein Mähmesserantrieb einer Schneideinrichtung einer landwirtschaftlichen Maschine mit zumindest zeitweise gegenläufig beweglich angetriebenen Messerbalkenabschnitten offenbart. Der Mähmesserantrieb ist im Wesentlichen mittig an der Schneideinrichtung angeordnet und umfasst ein angetriebenes, um eine Rotationsachse rotierendes Antriebselement, an dem eine erste mit einem ersten Kipphebel gekoppelter Pleuelstange und eine zweite mit einem zweiten Kipphebel gekoppelter Pleuelstange schwenkbar um jeweils eine Achse exzentrisch zur Rotationsachse des Antriebselements gelagert ist. Die Kipphebel sind jeweils mit einem Messerbalkenabschnitt verbunden und regen bei einer Rotation des Antriebselements den Messerbalkenabschnitt zum Oszillieren an.

Ausgehend vom vorstehend genannten Stand der Technik liegt der Erfindung die Aufgabe zugrunde, ein Schneidwerk der eingangs genannten Art weiterzubilden, welches sich durch eine einfache, anpassbare Synchronisierung der Schwingbewegung der Segmente des Messerbalkens durch eine Verkürzung der Übertragungswege auszeichnet.

Diese Aufgabe wird erfindungsgemäß von einem Schneidwerk gemäß Anspruch 1 gelöst.

Vorteilhafte Weiterbildungen sind Gegenstand der Unteransprüche.

Gemäß dem Anspruch 1 wird ein Schneidwerk vorgeschlagen, mit einem sich im Wesentlichen über die Breite des Schneidwerks erstreckenden, segmentierten Mähbalken, wobei der Mähbalken zumindest ein erstes und ein zweites jeweils mit Mähmessern versehenes Segment aufweist. Das erste und zweite Segment des Mähbalkens sind von einem gemeinsamen Mähmesserantrieb oszillierend antreibbar. Mit dem Mähmesserantrieb sind das erste Segment durch einen ersten Umlenkhebel und das zweite Segment durch einen zweiten Umlenkhebel trieblich verbunden. Zur Vereinfachung sowie Anpassbarkeit der Synchronisierung der Schwingbewegung der Segmente des Messerbalkens ist vorgesehen, dass der im Wesentlichen mittig am Schneidwerk angeordnete Mähmesserantrieb ein angetriebenes, um eine Rotationsachse rotierendes Antriebselement umfasst, an dem ein erster mit dem ersten Umlenkhebel gekoppelter Schwinghebel und ein zweiter mit dem zweiten Umlenkhebel gekoppelter Schwinghebel um eine gemeinsame, exzentrisch zur Rotationsachse angeordnete Drehachse schwenkbar gelagert sind, wobei die Schwinghebel zur Übertragung einer zueinander phasenverschobenen Schwingbewegung auf den jeweiligen Umlenkhebel eingerichtet sind. Hierdurch lässt sich den konträren Anforderungen an eine minimierte Schwingungsabgabe des Schneidwerks aufgrund einer Phasenverschiebung der Schwingbewegungen von 180° zueinander nach außen, was ein maximales Moment zum Antrieb der Segmente des Messerbalkens bewirkt, einerseits und einer Reduzierung des aufgenommen maximalen Moment zum Antreiben der Segmente des Messerbalkens bei zunehmender Schwingungsabgabe nach außen andererseits Rechnung tragen. Im Gegensatz zu dem aus der DE 10 2010 040 870 A1 bekannten Schneidwerk, welches nur aufgrund der von einer mittigen Positionierung abweichenden Anordnung des Mähmesserantriebs eine Phasenverschiebung aufweist, lässt sich erfindungsgemäß eine gezielte Anpassung der Phasenverschiebung vornehmen. In Abhängigkeit von Schneidwerkbreite lässt sich durch die Größenordnung der Phasenverschiebung wahlweise die Schwingungsabgabe oder die Momentaufnahme stärker reduzieren. Ein weiterer Vorteil der mittigen Anordnung des Mähmesserantriebs ist eine geringere Strukturbelastung der Antriebskomponenten, d.h. insbesondere des Antriebelements sowie der Schwinghebel und Umlenkhebel. Durch die Verlagerung des Mähmesserantriebes in die Mitte können die äußeren Seitenwände des Schneidwerks können schmaler ausgeführt werden, da diese keine Antriebskomponenten aufnehmen müssen, so dass Ernteverluste reduziert werden können. Die Synchronisation der Schwingbewegung erfolgt wegen der mittigen Anordnung des Mähmesserantriebs über einen deutlich verkürzten Kraftflussweg.

Durch eine Variation der Längenrelation des ersten Schwinghebels und des zweiten Schwinghebels zueinander ist die Größenordnung der Phasenverschiebung der Schwingbewegung veränderbar. Auf diese Weise kann die Charakteristik der Schwingbewegung an eine der Anforderungen hinsichtlich Schwingungsabgabe nach außen und maximal aufzunehmendem Antriebsmoment angepasst werden.

Für eine bauraumsparende, insbesondere flachbauende Anordnung kann das Antriebselement scheibenförmig ausgebildet sein, so dass es zwischen Schneidwerkmulde und Schneidwerktisch angeordnet werden kann. Der vertikale Abstand zwischen dem Messerbalken und dem Schneidwerktisch bleibt dabei im Wesentlichen unverändert.

Hierbei kann das Antriebselement um einen Lagerzapfen drehbar gelagert sein, der zwischen der Schneidwerkmulde und dem Schneidwerktisch angeordnet ist. Hierzu kann ein separater Rahmen zur Aufnahme des Antriebselementes und weiterer Komponenten des Mähmesserantriebs angeordnet sein. Die Anordnung des Lagerzapfens kann mit einem möglichst geringen Abstand zum Messerbalken gewählt werden, um die Kraftübertragungswege kurz zu halten.

Weiterhin kann das Antriebselement einen exzentrisch angeordneten Zapfen aufweisen, welcher die gemeinsame Drehachse bildet, um die die beiden Schwinghebel drehbar gelagert sind.

Hierzu kann auf dem Zapfen eine Buchse drehbar gelagert sein, auf welcher der erste Schwinghebel drehfest angeordnet ist, während der zweite Schwinghebel relativ zu diesem beweglich auf der Buchse gelagert ist. Dadurch sind der erste Schwinghebel und der zweite Schwinghebel gegenläufig bewegbar. Die Lagerung der Buchse auf dem Zapfen kann mittels zweier gegeneinander gestellter Wälzlager, insbesondere Kegelrollenlager, erfolgen, um ein Moment auf das Antriebselement aufgebrachtes Moment aufnehmen zu können.

Für eine bauraumsparende Lagerung kann der zweite Schwinghebel mittels eines Gleitlagers auf der Buchse gelagert sein. Das Gleitlager zeichnet sich gegenüber einem Wälzlager durch ein geringeres Bauvolumen und eine höhere Tragfähigkeit aus.

In vorteilhafter Weiterbildung kann das Antriebselement durch einen parallel zur Schneidwerksmulde angeordneten Riementrieb antreibbar sein. Der Riementrieb ermöglicht eine flachbauende Anordnung im Bereich zwischen der Schneidwerkmulde und dem Schneidwerktisch.

Insbesondere kann das Antriebselement des Mähmesserantriebs als Riemenscheibe ausgebildet sein. Dabei kann das Antriebselement bevorzugt als eine Keilriemenscheibe ausgebildet sein, so dass hohe Drehmomente übertragbar sind, was insbesondere bei großen Schneidwerksbreiten erforderlich ist.

Weiterhin kann der Riementrieb eine Antriebsriemenscheibe, zumindest eine Umlenkriemenscheibe, eine Spannvorrichtung sowie einen Antriebsriemen umfassen, welcher die Antriebsriemenscheibe und das Antriebselement trieblich miteinander verbindet. Dabei ist der Antriebsriemen bevorzugt als Keilriemen ausgeführt. Die Anordnung des Riementriebes ist vorzugsweise in einer horizontalen Ebene, insbesondere im Wesentlichen im Mittenbereich, des Schneidwerks vorgesehen. Der vorhandene Bauraum wird dabei sinnvoll ausgenutzt, eine signifikante Vergrößerung des vertikalen Abstands zwischen dem Messerbalken und der Oberfläche des Schneidwerktisches ist nicht erforderlich.

Gemäß einer bevorzugten Weiterbildung kann der Schneidwerktisch längenveränderlich ausgebildet sein. Hierdurch ist eine flexible Anpassung der Tischlänge an unterschiedliche Erntegutarten möglich, um Ernteverluste zu minimieren. Ein Schneidwerk mit einem längenverstellbaren Schneidwerktisch ist aus der DE 10 2010 046 862 A1 bekannt.

Zur Anpassung der Riemenlänge an einen Verstellweg des Schneidwerktischs kann die Spannvorrichtung einen um eine Drehachse schwenkbaren Schwenkarm mit einer an seinem freien Ende angeordneten Spannrolle aufweisen, um die der Antriebsriemen geführt ist. Dabei dient die Spannvorrichtung bei einer Längenveränderung des Schneidwerktischs zur Aufrechterhaltung der Bandspannung und dem gleichzeitigen Längenausgleich des Antriebsriemens. Zum Längenausgleich des Antriebsriemens bei einer Längenveränderung des Schneidwerktischs wird der Schwenkarm mit dem Verstellen des Schneidwerktischs verschwenkt, um den Antriebsriemen nachzuführen. Dadurch wird ein einfacher Ausgleich des variierenden Abstands zwischen dem Messerbalken und der Schneidwerktragstruktur ermöglicht.

Dabei kann der Schwenkarm mit einer Vorspannung beaufschlagt sein, die zur Aufrechterhaltung der Bandspannung beim Längenausgleich des Antriebsriemens dient. Zur Aufbringung der Vorspannung kann beispielsweise eine Feder oder ein Hydraulikzylinder vorgesehen sein.

Des Weiteren kann die Antriebsriemenscheibe durch ein Winkelgetriebe, das mit einer Vorgelegewelle des Schneidwerks trieblich verbunden ist, antreibbar sein.

Die vorliegende Erfindung wird nachstehend anhand eines in den Zeichnungen dargestellten Ausführungsbeispieles näher erläutert.

Es zeigen:
- Fig. 1: eine schematische Teilansicht eines Schneidwerks;
- Fig. 2: eine Schnittansicht eines Antriebselementes eines Mähmesserantriebs;
- Fig. 3: eine schematische Ansicht des Mähmesserantriebs von oben;
- Fig. 4: ein Diagramm mit Geschwindigkeitsverläufen von Schwingungsbewegungen zweier von dem Antriebselement phasenverschoben angetriebenen Schwinghebeln.

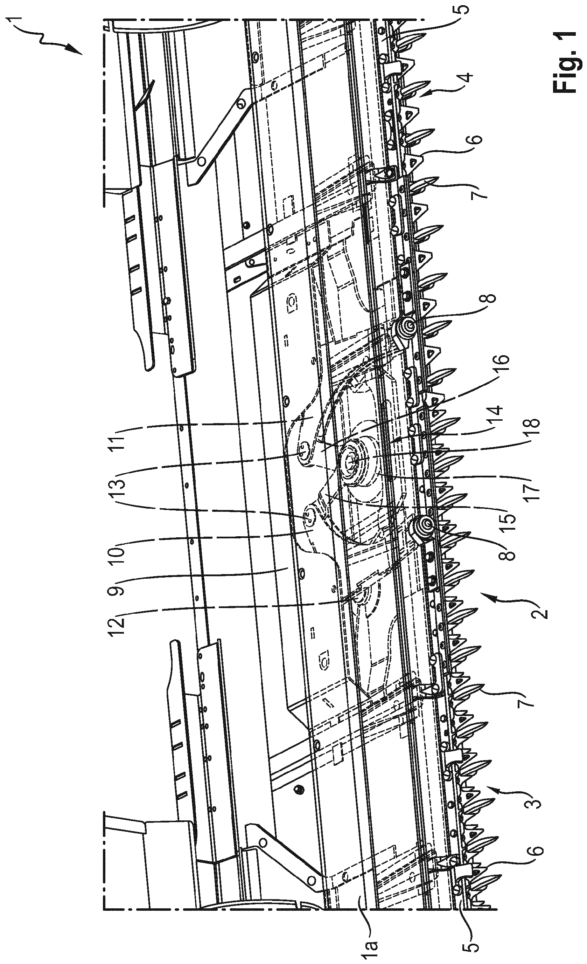

In Fig. 1 ist eine schematische Teilansicht eines in seinem Aufbau grundsätzlich bekannten Schneidwerks 1 mit einem längenverstellbaren Schneidwerktisch 1a (transparent dargestellt) dargestellt. Hinsichtlich einer möglichen Ausgestaltung des längenverstellbaren Schneidwerktischs 1a sowie der zum Verstellen des Schneidwerktischs 1a vorgesehenen Mittel wird vollumfänglich auf die DE 10 2010 046 862 A1 verwiesen.

Das Schneidwerk 1 umfasst einen segmentierten Messerbalken 2, welcher sich im Wesentlichen über die gesamte Breite des Schneidwerks 1 erstreckt. Der Messerbalken 2 weist ein erstes Segment 3 und ein zweites Segment 4 auf. Das jeweilige Segment 3 und 4 weist eine Vielzahl von an einer Messerschiene 5 angeordneten Mähmessern 6 auf. Am vorderen Rand des jeweiligen Segments 3 und 4 des Mähbalkens 2 sind Mähfinger 7 ortsfest angeordnet, an denen sich bei einer Hin- und Herbewegung der Messerschiene 5 die Mähmesser 6 vorbeibewegen.

Zur Übertragung von gegenläufigen lateralen Schwingbewegungen auf die jeweilige Messerschiene 5 des ersten Segmentes 3 und des zweiten Segments 4 sind im mittigen Bereich des Schneidwerks 1 Kopplungselemente 8 vorgesehene. Die Kopplungselemente 8 verbinden die beweglichen Komponenten des ersten und zweiten Segments 3, 4 mit einem Mähmesserantrieb 14, der diese oszillierend antreibt. Ein Rahmen 9 ist längsverschieblich an dem Schneidwerk 1 angeordnet, welcher der Aufnahme von Komponenten des Mähmesserantriebs 14 dient. Das jeweilige Kopplungselement 8 ist mit einem Ende eines ersten Umlenkhebels 10 bzw. eines zweiten Umlenkhebels 11 verbunden. Die Umlenkhebel 10 und 11 sind jeweils um eine vertikale Schwenkachse 12 schwenkbar gelagert, von denen in Fig. 1 nur eine sichtbar ist. Mit ihrem anderen Ende sind der jeweilige Umlenkhebel 10 bzw. 11 um Drehachsen 13 schwenkbar an einem ersten Schwinghebeln 15 bzw. einem zweiten Schwinghebel 16 angelenkt. Der erste Schwinghebel 15 und der zweite Schwinghebel 16 sind an einem gemeinsamen, rotierend angetriebenen Antriebselement 17 um eine gemeinsame Drehachse 18 schwenkbar gelagert. Die Drehachse 18 ist exzentrisch zur Rotationsachse 19 des Antriebselements 17 angeordnet.

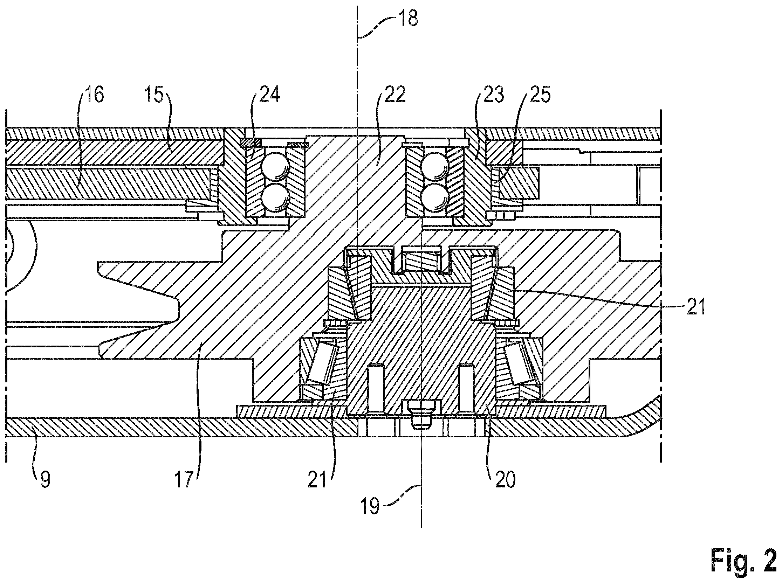

Die Darstellung in Fig. 2 zeigt eine Schnittansicht des Antriebselementes 17 des Mähmesserantriebs 14. Das Antriebselement 17 ist als eine Riemenscheibe ausgeführt, welche auf einem auf dem Rahmen 9 angeordneten Zapfen 20 rotierend gelagert ist. Zur Aufnahme eines von dem Antriebselement 17 auf den Zapfen 20 übertragenen Moments sind gegeneinander gestellte Kegelrollenlager 21 vorgesehen. Auf der Oberseite des als Riemenscheibe ausgeführten Antriebselementes 17 ist in radialer Richtung versetzt zur Rotationsachse 19 ein Lagerzapfen 22 angeordnet. Auf dem Lagerzapfen 22 ist eine Buchse 23 mittels eines Wälzlagers 24 drehbar gelagert. Auf der Buchse 23 ist der erste Schwinghebel 15 drehfest angeordnet, während der zweite Schwinghebel 16 durch ein Gleitlager 25 relativ zu der Buchse 23 respektive dem ersten Schwinghebel 15 drehbar bzw. schwenkbar gelagert ist.

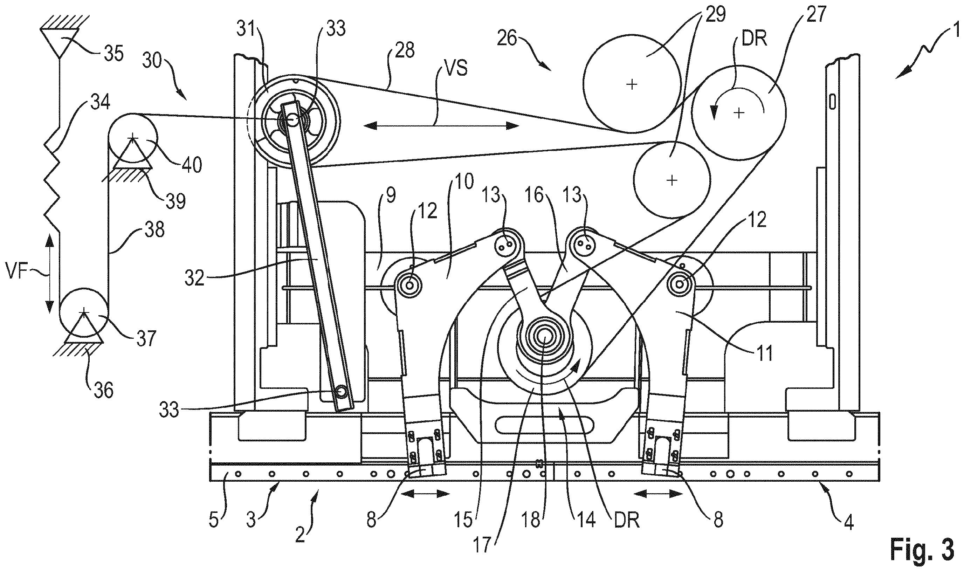

In Fig. 3 eine schematische Ansicht des Mähmesserantriebs 14 von oben dargestellt. Zum rotatorischen Antreiben des Antriebselementes 17 ist ein Riementrieb 26 vorgesehen. Der Riementrieb 26 umfasst eine Antriebsriemenscheibe 27, einen Antriebsriemen 28, zumindest eine Umlenkriemenscheibe 29 sowie eine Spannvorrichtung 30. Die Spannvorrichtung 30 weist eine Spannrolle 31 auf, die an einem freien Ende eines Schwenkarms 32 drehbar gelagert ist. Der Schwenkarm 32 ist um eine Schwenkachse 33, die am Rahmen 9 angeordnet ist, schwenkbar. Der Schwenkarm 32 wird mit einer Rückstellkraft beaufschlagt, welche der Zugkraft des Antriebsriemens 28 entgegengerichtet ist. Die auf den Schwenkarm 32 aufgebrachte Rückstellkraft kann einstellbar sein, um bei einer Längung des Antriebsriemens 28 diese nachjustieren zu können. Die Rückstellkraft kann, wie in Fig. 3 schematisch angedeutet, durch ein Federelement 34 oder einen Hydraulikzylinder mittelbar aufgebracht werden. Das Federelement 34 ist durch ein Zugkraft übertragendes Element 38, wie ein Drahtseil, mit dem Schwenkarm 32 verbunden.

Das Federelement 34 ist mit einem Ende ortsfest an einer Lagerstelle 35 am Schneidwerk 1 angeordnet, wobei die Lagerstelle 35 bei einer Längenverstellung des Schneidwerktischs in durch einen Pfeil angedeutete Verfahrrichtung VF gerichtete Bewegung ihren Abstand zur Lagerstelle 36 verändert. Der Abstand zwischen der Lagerstelle 36, an der eine Umlenkrolle 37 gelagert ist, und einer hierzu beabstandet angeordneten weiteren Lagerstelle 39, an der eine weitere Umlenkrolle 40 gelagert ist, um die das als Drahtseil ausgeführte Zugkraft übertragende Element 38 geführt ist, bleibt unverändert. Mit zunehmender Verkürzung des Abstands zwischen den Lagestellen 35 und 36 wird der Schwenkarm 32 in Richtung der Antriebsriemenscheibe 27 geschwenkt. Ein Pfeil kennzeichnet einen entsprechender Verstellweg VS des Schwenkarms 32.

Pfeile DR bezeichnen die Drehrichtung der Antriebsriemenscheibe 27 sowie des Antriebelementes 17. Aufgrund der exzentrischen Lagerung des ersten und zweiten Schwinghebels 15, 16 wird die rotatorische Bewegung des Antriebselements 17 in eine translatorische Bewegung des ersten und zweiten Segments 3, 4 des Messerbalkens 2 überführt. Die Phasenverschiebung zwischen den Schwingbewegungen lässt durch eine Variation der Längen des ersten und zweiten Schwinghebels 15, 16 erreichen.

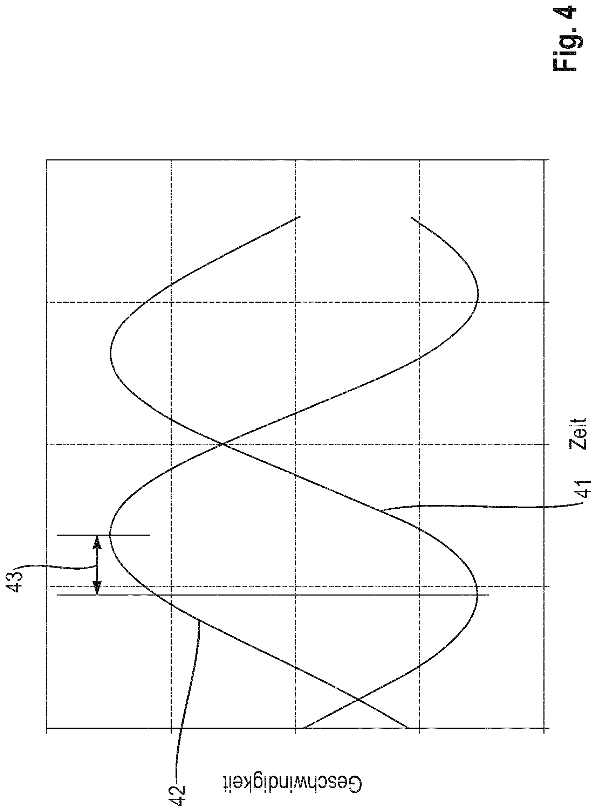

Die Darstellung in Fig. 4 zeigt ein Diagramm mit Geschwindigkeitsverläufen 41, 42 der Schwingungsbewegungen des ersten und zweiten Schwinghebels 15, 16, die von dem Antriebselement 17 phasenverschoben angetriebenen werden. Der Geschwindigkeitsverlauf 41 ist der des ersten Schwinghebels 15, während der Geschwindigkeitsverlauf 42 den des zweiten Schwinghebels 16 wiedergibt. Mit dem Bezugszeichen 43 ist eine Phasenverschiebung zwischen den beiden Geschwindigkeitsverläufe 41, 42 bezeichnet. Die Phasenverschiebung 43 beträgt weniger als 180°, im dargestellten Ausführungsbeispiel 50°, so dass einerseits eine nur teilweise Reduzierung der nach außen abgegebenen Schwingungen bewirkt wird. Andererseits führt dies zu einer Reduzierung des aufgenommen maximalen Moment, das für das gegenläufige Antreiben des ersten und zweiten Segments 3, 4 des Messerbalkens 2 aufzubringen ist.

## Patentansprüche

1. Schneidwerk (1), mit einem sich im Wesentlichen über die Breite des Schneidwerks (1) erstreckenden, segmentierten Mähbalken (2), wobei der Mähbalken (2) zumindest ein erstes Segment (3) und ein zweites Segment (4) aufweist, die jeweils mit Mähmessern (6) versehen sind, die von einem gemeinsamen Mähmesserantrieb (14) oszillierend antreibbar sind, mit welchem das erste Segment (3) durch einen ersten Umlenkhebel (10) und das zweite Segment (4) durch einen zweiten Umlenkhebel (11) trieblich verbunden sind, wobei der im Wesentlichen mittig am Schneidwerk (1) angeordnete Mähmesserantrieb (14) ein angetriebenes, um eine Rotationsachse (19) rotierendes Antriebselement (17) umfasst, an dem ein erster mit dem ersten Umlenkhebel (10) gekoppelter Schwinghebel (15) und ein zweiter mit dem zweiten Umlenkhebel (11) gekoppelter Schwinghebel (16) schwenkbar gelagert sind, **dadurch gekennzeichnet, dass** an dem rotierenden Antriebselement (17) der erste mit dem ersten Umlenkhebel (10) gekoppelte Schwinghebel (15) und der zweite mit dem zweiten Umlenkhebel (11) gekoppelte Schwinghebel (16) um eine gemeinsame, exzentrisch zur Rotationsachse (19) angeordnete Drehachse (18) schwenkbar gelagert sind, wobei die Schwinghebel (15, 16) zur Übertragung einer zueinander phasenverschobenen Schwingbewegung auf den jeweiligen Umlenkhebel (10, 11) eingerichtet sind, wobei durch eine Variation der Längenrelation des ersten Schwinghebels (15) und des zweiten Schwinghebels (16) zueinander die Größenordnung der Phasenverschiebung der Schwingbewegung veränderbar ist.

2. Schneidwerk (1) nach Anspruch 1 oder 2, **dadurch gekennzeichnet, dass** das Antriebselement (17) scheibenförmig ausgebildet und zwischen einer Schneidwerkmulde und einem Schneidwerktisch (1a) angeordnet ist.

3. Schneidwerk (1) nach Anspruch 3, **dadurch gekennzeichnet, dass** das Antriebselement (17) um einen Lagerzapfen (20) drehbar gelagert ist, der zwischen der Schneidwerkmulde und dem Schneidwerktisch (1a) angeordnet ist.

4. Schneidwerk (1) nach Anspruch 3 oder 4, **dadurch gekennzeichnet, dass** das Antriebselement (17) einen exzentrisch angeordneten Zapfen (22) aufweist, welcher die gemeinsame Drehachse (18) bildet, um die die beiden Schwinghebel (15, 16) drehbar gelagert sind.

5. Schneidwerk (1) nach Anspruch 5, **dadurch gekennzeichnet, dass** um den Zapfen (22) eine Buchse (23) drehbar gelagert ist, auf welcher der erste Schwinghebel (15) drehfest angeordnet ist, während der zweite Schwinghebel (16) relativ zu diesem beweglich auf der Buchse (23) gelagert ist.

6. Schneidwerk (1) nach Anspruch 6, **dadurch gekennzeichnet, dass** der zweite Schwinghebel (16) mittels eines Gleitlagers (25) auf der Buchse (23) gelagert ist.

7. Schneidwerk (1) nach einem der vorangehenden Ansprüche, **dadurch gekennzeichnet, dass** das Antriebselement (17) durch einen in einer horizontalen Ebene unterhalb des Schneidwerktischs (1a) angeordneten Riementrieb (26) antreibbar ist.

8. Schneidwerk (1) nach Anspruch 8, **dadurch gekennzeichnet, dass** das Antriebselement (17) als Riemenscheibe ausgebildet ist.

9. Schneidwerk (1) nach Anspruch 9, **dadurch gekennzeichnet, dass** der Riementrieb (26) eine Antriebsriemenscheibe (27), zumindest eine Umlenkriemenscheibe (29), eine Spannvorrichtung (30) sowie einen Antriebsriemen (28) umfasst, welcher die Antriebsriemenscheibe (27) und das Antriebselement (17) trieblich verbindet.

10. Schneidwerk (1) nach einem der vorangehenden Ansprüche, **dadurch gekennzeichnet, dass** der Schneidwerktisch (1a) längenveränderlich ausgebildet ist.

11. Schneidwerk (1) nach Anspruch 11, **dadurch gekennzeichnet, dass** die Spannvorrichtung (30) einen um eine Drehachse (33) schwenkbaren Schwenkarm (32) mit einer an seinem freien Ende angeordneten Spannrolle (31) aufweist, wobei die Spannvorrichtung (30) bei einer Längenveränderung des Schneidwerktischs (1a) zur Aufrechterhaltung der Bandspannung und dem Längenausgleich des Antriebsriemens (28) dient.

12. Schneidwerk (1) nach einem der Ansprüche 10 bis 12, **dadurch gekennzeichnet, dass** die Antriebsriemenscheibe (27) durch ein Winkelgetriebe, das mit einer Vorgelegewelle des Schneidwerks (1) trieblich verbunden ist, antreibbar ist.

## Claims

1. A cutting assembly (1), with a segmented cutter bar (2) which substantially extends over the width of the cutting assembly (1), wherein the cutter bar (2) has at least a first segment (3) and a second segment (4), which are respectively provided with cutter blades (6) which can be driven in oscillation from a common cutter blade drive (14) with which the first segment (3) is operatively connected by means of a first bell crank (10) and the second segment (4) is operatively connected by means of a second bell crank (11), wherein the cutter blade drive (14) which is disposed substantially centrally on the cutting assembly (1) comprises a driven drive element (17) which rotates about an axis of rotation (19) on which a first rocker arm (15) coupled to the first bell crank (10) and a second rocker arm (16) coupled to the second bell crank (11) are pivotably mounted, **characterized in that** at the rotating drive element (17), the first rocker arm (15) coupled to the first bell crank (10) and the second rocker arm (16) coupled to the second bell crank (11) are pivotably mounted about a common rotational axis (18) which is eccentric to the axis of rotation (19), wherein the rocker arms (15, 16) are configured to transmit an oscillating movement to the respective bell cranks (10, 11) which is offset in phase with respect to each other, wherein by means of a variation in the relationship of the lengths of the first rocker arm (15) and of the second rocker arm (16) with respect to each other, the magnitude of the phase offset of the oscillating movement can be varied.

2. The cutting assembly (1) according to claim 1 or claim 2, **characterized in that** the drive element (17) is configured as a disk and is disposed between a cutting assembly base and a cutting assembly platform (1a).

3. The cutting assembly (1) according to claim 3, **characterized in that** the drive element (17) is rotatably mounted about a bearing journal (20) which is disposed between the cutting assembly base and the cutting assembly platform (1a).

4. The cutting assembly (1) according to claim 3 or claim 4, **characterized in that** the drive element (17) has an eccentrically disposed journal (22) which forms the common rotational axis (18) about which the two rocker arms (15, 16) are rotatably mounted.

5. The cutting assembly (1) according to claim 5, **characterized in that** a bushing (23) is rotatably mounted about the journal (22), on which bushing the first rocker arm (15) is mounted so as to be fixed against rotation, while the second rocker arm (16) is movably mounted with respect thereto on the bushing (23).

6. The cutting assembly (1) according to claim 6, **characterized in that** the second rocker arm (16) is mounted on the bushing (23) by means of a friction bearing (25).

7. The cutting assembly (1) according to one of the preceding claims, **characterized in that** the drive element (17) can be driven by means of a belt drive (26) disposed in a horizontal plane below the cutting assembly platform (1a).

8. The cutting assembly (1) according to claim 8, **characterized in that** the drive element (17) is configured as a belt pulley.

9. The cutting assembly (1) according to claim 9, **characterized in that** the belt drive (26) comprises a drive belt pulley (27), at least one belt deflecting pulley (29), a tensioning device (30) as well as a drive belt (28) which operatively connects the drive belt pulley (27) and the drive element (17).

10. The cutting assembly (1) according to one of the preceding claims, **characterized in that** the cutting assembly platform (1a) is configured so as to be variable in length.

11. The cutting assembly (1) according to claim 11, **characterized in that** the tensioning device (30) has a pivot arm (32) which is pivotable about a rotational axis (33) and has a tensioning roller (31) disposed at its free end, wherein the tensioning device (30) serves to maintain the belt tension and compensate for the length of the drive belt (28) in the event of a variation in the length of the cutting assembly platform (1a).

12. The cutting assembly (1) according to one of claims 10 to 12, **characterized in that** the drive belt pulley (27) can be driven by means of an angular transmission which is operatively connected to a lay shaft of the cutting assembly (1).

## Revendications

1. Tablier de coupe (1) comprenant un lamier segmenté (2) s'étendant sensiblement sur la largeur du tablier de coupe (1), le lamier (2) comportant au moins un premier segment (3) et un second segment (4) qui sont munis respectivement de lames de coupe (6) qui sont entraînables de manière oscillante par un entraînement de lames de coupe commun (14) avec lequel le premier segment (3) est relié de manière motrice par l'intermédiaire d'un premier levier de renvoi (10) et le second segment (4) est relié de manière motrice par l'intermédiaire d'un second levier de renvoi (11), l'entraînement de lames de coupe (14) disposé sensiblement au centre du tablier de coupe (1) incluant un élément d'entraînement entraîné (17) qui tourne autour d'un axe de rotation (19) et sur lequel sont montés à pivotement un premier levier oscillant (15) couplé au premier levier de renvoi (10) et un second levier pivotant (16) couplé au second levier de renvoi (11), **caractérisé en ce que**, au niveau de l'élément d'entraînement rotatif (17), le premier levier pivotant (15) couplé au premier levier de renvoi (10) et le second levier pivotant (16) couplé au second levier de renvoi (11) sont montés à pivotement autour d'un axe de rotation commun (18) disposé excentriquement par rapport à l'axe de rotation (19), les leviers pivotants (15, 16) étant agencés pour transférer un mouvement oscillant déphasé mutuellement à l'autre levier de renvoi respectif (10, 11), l'ordre de grandeur du déphasage du mouvement oscillant étant modifiable par l'intermédiaire d'une variation de la relation de longueur du premier levier oscillant (15) et du second levier pivotant (16) l'un par rapport à l'autre.

2. Tablier de coupe (1) selon la revendication 1 ou 2, **caractérisé en ce que** l'élément d'entraînement (17) est conformé en disque et disposé entre un bac de tablier de coupe et une table de tablier de coupe (1a).

3. Tablier de coupe (1) selon la revendication 3, **caractérisé en ce que** l'élément d'entraînement (17) est monté à rotation autour d'un tourillon (20) qui est disposé entre le bac de tablier de coupe et la table de tablier de coupe (1a).

4. Tablier de coupe (1) selon la revendication 3 ou 4, **caractérisé en ce que** l'élément d'entraînement (17) comporte un pivot disposé excentriquement (22) qui forme l'axe de rotation commun (18) autour duquel les deux leviers pivotants (15, 16) sont montés à rotation.

5. Tablier de coupe (1) selon la revendication 5, **caractérisé en ce que**, autour du pivot (22) est montée à rotation une douille (23) sur laquelle le premier levier oscillant (15) est monté solidaire en rotation, tandis que le second levier pivotant (16) est monté mobile par rapport à celui-ci sur la douille (23).

6. Tablier de coupe (1) selon la revendication 6, **caractérisé en ce que** le second levier pivotant (16) est monté sur la douille (23) au moyen d'un palier lisse (25).

7. Tablier de coupe (1) selon une des revendications précédentes, **caractérisé en ce que** l'élément d'entraînement (17) est entraînable par l'intermédiaire d'un entraînement à courroie (26) disposé dans un plan horizontal au-dessous de la table de tablier de coupe (1a).

8. Tablier de coupe (1) selon la revendication 8, **caractérisé en ce que** l'élément d'entraînement (17) est conformé en poulie.

9. Tablier de coupe (1) selon la revendication 9, **caractérisé en ce que** l'entraînement à courroie (26) inclut une poulie menante (27), au moins une poulie de renvoi (29), un dispositif de tension (30) ainsi qu'une courroie d'entraînement (28) qui relie de manière motrice la poulie menante (27) et l'élément d'entraînement (17).

10. Tablier de coupe (1) selon une des revendications précédentes, **caractérisé en ce que** la table de tablier de coupe (1a) est conçue avec une longueur variable.

11. Tablier de coupe (1) selon la revendication 11, **caractérisé en ce que** le dispositif de tension (30) comporte un bras pivotant (32) apte à pivoter autour d'un axe de rotation (33) et muni d'un galet de tension (31) disposé à son extrémité libre, le dispositif de tension (30) servant, en cas de modification de longueur de la table de tablier de coupe (la), à maintenir la tension de courroie et à compenser la longueur de la courroie d'entraînement (28).

12. Tablier de coupe (1) selon une des revendications 10 à 12, **caractérisé en ce que** la poulie menante (27) peut être entraînée par l'intermédiaire d'un engrenage angulaire qui est relié de manière motrice à l'arbre intermédiaire du tablier de coupe (1).
